# EUROPÄISCHE PATENTSCHRIFT

(11) **EP 1 211 137 B1**
(45) Veröffentlichungstag und Bekanntmachung des Hinweises auf die Patenterteilung: **24.03.2004**
(21) Anmeldenummer: 01124244.3
(22) Anmeldetag: 16.10.2001
(51) Int. Cl.: B60R 13/02, F16B 5/06

(54) **Verbindungselement**
Connecting element
Element pour connexion

(30) Priorität: 26.10.2000 DE 10053200
(43) Veröffentlichungstag der Anmeldung: 05.06.2002
(73) Patentinhaber: TRW Automotive Electronics & Components GmbH & Co. KG, 67677 Enkenbach/Alsenborn (DE)
(72) Erfinder: Kraus, Willi, 67269 Grünstadt (DE)
(74) Vertreter: Sties, Jochen, Dipl.-Ing.

(56) Entgegenhaltungen:
- EP-A- 0 421 058
- EP-A- 0 641 939
- DE-A- 19 743 928
- US-A- 4 176 428
- US-A- 4 602 887

## Beschreibung

Die Erfindung betrifft ein Verbindungselement, nach dem Oberbegriff des Anspruchs 1.

Ein derartiges Verbindungselement ist beispielsweise in der EP 0 421 058 A beschrieben. Bei diesem Verbindungselement besteht die Rastverbindung aus einem Profilbolzen, der in eine mit Profilzähnen versehene Ausnehmung greift.

In der DE 197 53 678 A1 ist ein Verbindungselement beschrieben, an dessen einem Ende sich das erste Befestigungsteil befindet, das vor der Montage an einem Verkleidungselement befestigt wird. Am anderen Ende des Verbindungselements befindet sich das zweite Befestigungsteil in Form eines Spreizelements, welches bei der Montage in eine am Trägerteil des Fahrzeugs vorgesehene Öffnung gesteckt wird. Durch Andrücken des Verkleidungsteiles wird das Spreizelement von einem Konus gespreizt und damit das zweite Befestigungsteil im Trägerteil verriegelt. Der Konus ist mit Rasten versehen, so daß der Abstand zwischen Verkleidungsteil und Trägerteil in einem gewissen Bereich eingestellt werden kann. Bei einer Demontage des Verkleidungsteiles geht die Einstellung des Abstandes jedoch verloren, da das zweite Befestigungsteil wieder vollständig vom Trägerteil entfernt werden muß.

Der Erfindung liegt die Aufgabe zugrunde, ein Verbindungselement zu schaffen, bei dem der Abstand zwischen den zu verbindenden Teilen reproduzierbar eingestellt werden kann.

Diese Aufgabe wird durch ein Verbindungselement mit den Merkmalen des Anspruchs 1 gelöst. Diese Gestaltung gestattet es, die Rastverbindung so einzustellen, daß sich der gewünschte Abstand zwischen den beiden zu verbindenden Teilen ergibt. Zusätzlich lassen sich aber die beiden Teile durch Lösen der Schnappverbindung trennen und anschließend wieder zusammenfügen, wobei der vorher eingestellte Abstand wiederhergestellt ist. Da einem Rastzahn an der einen Fläche mehrere Rastzähne in unterschiedlicher Höhe an der anderen Fläche gegenüberstehen, so daß das Kolbenelement in mehreren Stufen im Topfelement einrasten kann, ist das Verbindungselement mit einer einfach herzustellenden Einstellmöglichkeit für den Abstand der zu verbindenden Teile versehen. Da weiterhin die mehreren Rastzähne an der einen Fläche in Umfangsrichtung über die Fläche verteilt sind, ist es möglich, die Rastzähne in einer kleineren Höhenabstufung anzuordnen, und dadurch eine feinere Einstellmöglichkeit für den Abstand zwischen den zu verbindenden Teilen vorzusehen.

Weitere Ausgestaltungen der Erfindung ergeben sich aus den Unteransprüchen.

Die Erfindung wird nachfolgend anhand bevorzugter Ausführungsformen beschrieben, wobei auf die beigefügten Zeichnungen Bezug genommen wird. In diesen zeigen:
Figur 1 eine Seitenansicht eines nicht zur Erfindung gehörenden Verbindungselements in einem ersten Zustand vor der Montage;
Figur 2 einen Schnitt durch das Verbindungselement aus Figur 1;
Figur 3 einen Schnitt durch das Verbindungselement aus Figur 1 in einem zweiten, zusammengefügten Zustand;
Figur 4a einen Schnitt durch das Verbindungselement aus Figur 1 in einem dritten Zustand;
Figur 4b einen Schnitt durch das Verbindungselement aus Figur 1 in einem vierten Zustand;
Figur 5a eine perspektivische Ansicht des Verbindungselements aus Figur 1 aus einem ersten Blickwinkel;
Figur 5b eine perspektivische Ansicht des Verbindungselements aus Figur 1 aus einem zweiten Blickwinkel;
Figur 6a eine perspektivische Ansicht eines Verbindungselements gemäß einer ersten Ausführungsform der Erfindung aus einem ersten Blickwinkel;
Figur 6b eine perspektivische Ansicht des Verbindungselements aus Figur 6a aus einem zweiten Blickwinkel;
Figur 7 einen Schnitt durch das Verbindungselement aus den Figuren 6a, 6b;
Figur 8a eine Seitenansicht des Topfelementes des Verbindungselements aus den Figuren 6a, 6b;
Figur 8b eine Draufsicht des Topfelementes aus Figur 8a;
Figur 8c einen Schnitt durch das Topfelement aus Figur 8b entlang der Linie VIII;
Figur 9a eine Ansicht des Kolbenelementes des Verbindungselements aus den Figuren 6a, 6b;
Figur 9b einen Schnitt durch das Kolbenelemente aus Figur 9a entlang der Linie IX;
Figur 10 eine perspektivische Ansicht des Topfelementes des Verbindungselements aus den Figuren 6a, 6b;
Figur 11a eine perspektivische Ansicht des Kolbenelements eines Verbindungselements gemäß einer zweiten Ausführungsform; und
Figur 11b eine perspektivische Ansicht des Topfelementes eines Verbindungselements gemäß einer zweiten Ausführungsform der Erfindung.

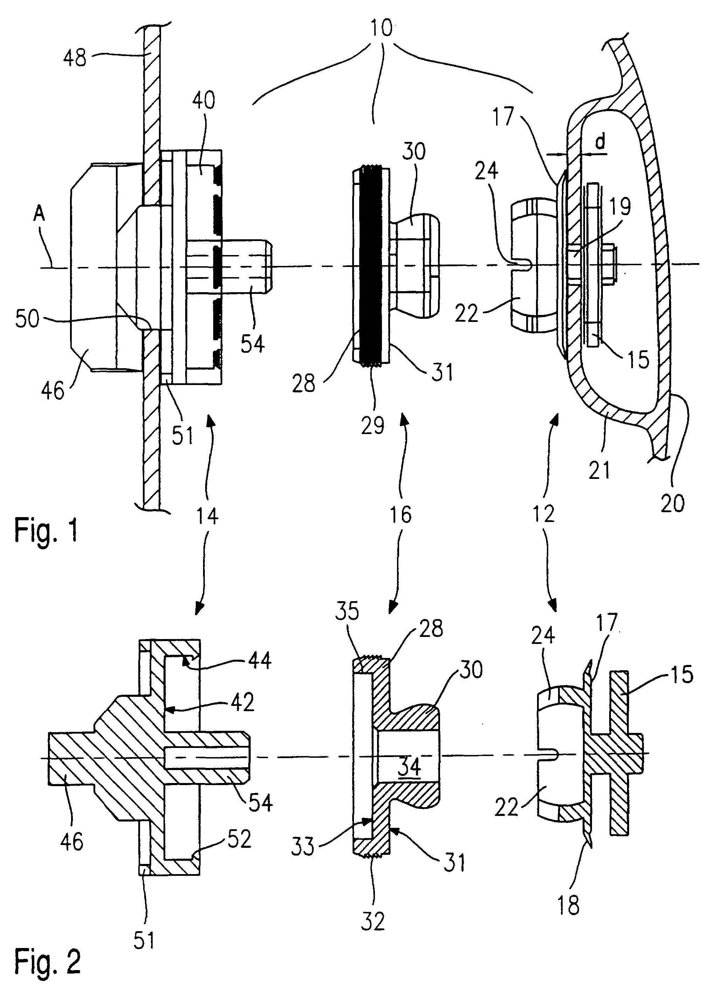

In Figur 1 ist ein Verbindungselement 10 dargestellt, das nicht unter den Umfang der Erfindung fällt, aber zum besseren Verständnis derselben zunächst beschrieben wird. Das Verbindungselement 10 besteht aus einem ersten Befestigungsteil 12, einem zweiten Befestigungsteil 14 und einem Zwischenelement 16, die entlang einer Längsachse A angeordnet, aber nicht miteinander verbunden sind, damit die Details der Einzelteile besser zu sehen sind.

Das erste Befestigungsteil 12 kann an einem Verkleidungsteil 20, etwa an einer Türverkleidung eines Fahrzeuges, befestigt sein. Die Befestigung kann auf verschieden Arten erfolgen, die dem Fachmann bekannt sind, weshalb im Rahmen dieser Beschreibung darauf nicht näher eingegangen wird. Im vorliegenden Fall sind an dem Befestigungsteil 12 senkrecht und zentrisch zur Achse A eine untere Scheibe 17 und parallel dazu in einem Abstand d eine obere Scheibe 15 vorgesehen. Die beiden Scheiben 17, 15 sind durch ein zylindrisches Distanzstück 19 miteinander verbunden. Mit den beiden Scheiben 17, 15 greift das Befestigungsteil an einer Lasche 21 an, die am Verkleidungsteil 20 angespritzt ist und in einer Öffnung das Distanzstück 19 aufnimmt, wobei die Materialstärke der Lasche 21 etwa der Distanz d entspricht. Die untere Scheibe 17 befindet sich auf der vom Verkleidungsteil 20 abgewandten Seite der Lasche 21 und weist an ihrem Umfang eine Federlippe 18 auf, die bei einem eventuellen Spalt zwischen der Scheibe 17 und der Lasche 21 eine Vorspannung erzeugt und dadurch ein Klappern verhindert. Auf der vom Verkleidungsteil 20 abgewandten Seite der unteren Scheibe 17 ist eine spreizbare Gelenkpfanne 22 ausgebildet, die aus einem Kugelschalenabschnitt besteht, der durch vier Schlitze 24 in vier Segmente geteilt ist.

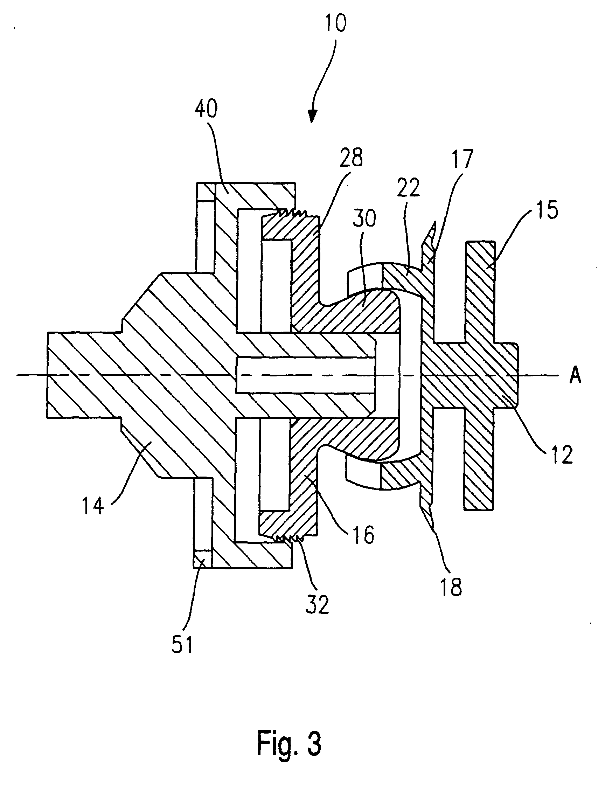

Das Zwischenelement 16 besteht aus einem kreiszylindrischen Kolbenelement 28, mit einer den Umfang des Zylinders bildenden Außenfläche 29 und einer Stirnseite 31 an der dem ersten Befestigungsteil 12 zugewandten Grundfläche des Zylinders. Auf der Stirnseite 31 ist ein Gelenkkopf 30 ausgebildet, der im wesentlichen kugelförmig ist, wobei die dem ersten Befestigungsteil 12 zugewandte Kugelhälfte stark abgeflacht ist, um die Baulänge des Verbindungsteiles 10 in Richtung der Achse A zu verkürzen. Der Gelenkkopf 30 kann von den Segmenten der Gelenkpfanne 22 umfaßt werden, wie in Fig. 3 anhand des zusammengefügten Verbindungselements 10 gezeigt ist, wodurch die Gelenkpfanne 22 und der Gelenkkopf 30 eine lösbare Schnappverbindung bilden. An der Außenfläche 29 des Kolbenelementes 28 sind vier parallele Rastzähne 32 vorgesehen, die ringartig das Kolbenelement umgeben und ein asymmetrisches Profil haben. Die dem Gelenkkopf 30 gegenüberliegende Grundfläche des Zylinders ist als vertiefter Boden 33 ausgebildet, so daß zwischen der Außenfläche 29 und der Innenfläche eine Wand 35 gebildet ist. In seiner Längsachse ist das Zwischenelement 16 mit einer Zentrierbohrung 34 versehen, deren Zweck im weiteren Verlauf der Beschreibung ersichtlich wird.

Das zweite Befestigungsteil 14 weist an seinem dem Zwischenelement 16 zugewandten Ende ein Topfelement 40 mit rundem Querschnitt, einem Topfboden 42 und eine den inneren Umfang bildenden Innenfläche 44 auf. Am gegenüberliegenden Ende des zweiten Befestigungsteiles 14 befindet sich ein Anker 46, mittels welchem das zweite Befestigungsteil 14 an einem Trägerteil 48 eines Kraftfahrzeugs, etwa der Türinnenwand, befestigt werden kann. Dazu ist in dem Trägerteil 48 eine besonders geformte Öffnung 50 vorgesehen, durch welche der Anker 46 hindurchgesteckt und dann durch Drehen des zweiten Befestigungsteils 14 um die Achse A verriegelt wird. Eine Dichtung 51 an der dem Träger 48 zugewandten Seite des Topfelementes 40 liegt an der Wand des Trägers 48 dicht an. Die Dichtung kann vorteilhafterweise durch ein Zweikomponentenspritzverfahren zusammen mit dem zweiten Befestigungsteil 14 hergestellt sein. Die Art der Anbringung des zweiten Befestigungsteils ist dem Fachmann an sich bekannt, so daß sie nicht weiter beschrieben werden muß. Selbstverständlich kann die Befestigung an dem Trägerteil 48 auch in jeder anderen bekannten Weise erfolgen.

An der Innenfläche 44 des Topfelementes 40 ist ein umlaufender Grat vorgesehen, der einen Rastzahn 52 bildet. Vom Topfboden 42 weg erstreckt sich senkrecht zentrisch zur Achse A ein Zentrierstift 54. Der Zentrierstift 54 kann in die Zentrierbohrung 34 greifen, wodurch das Zwischenelement 16 entlang der Achse A verschiebbar geführt ist.

Das Kolbenelement 28 kann in das Topfelement 40 eintauchen, wobei der Rastzahn 52 einen der Rastzähne 32 am Kolbenelement 28 hintergreift. Aufgrund des Profils der Rastzähne ist die so gebildete Rastverbindung zwischen dem Kolbenelement 28 und dem Topfelement 40 nur schwer lösbar. Da an der Außenfläche des Kolbenelements 28 mehrere Rastzähne 32 in unterschiedlicher Höhe angebracht sind, kann das Kolbenelement 28 in mehreren Stufen im Topfelement 40 einrasten, so daß sich eine Einstellmöglichkeit für die Länge des Verbindungselements 10 in Richtung der Längsachse A und damit für den Abstand zwischen dem Verkleidungsteil 20 und dem Trägerteil 48 ergibt.

Vorteilhafterweise werden das Zwischenelement 16 und das zweite Befestigungsteil 14 bereits bei der Herstellung zusammengefügt und als Einheit ausgeliefert, bei der das Kolbenelement 28 bis zur ersten Raststellung in das Topfelement 40 eingedrückt ist.

Vor der Montage der Verkleidung wird zunächst das erste Befestigungsteil 12 am Verkleidungsteil 20 und das zweite Befestigungsteil 14, zusammen mit dem in der ersten Stufe eingerasteten Zwischenelement 16, am Trägerteil 48 des Fahrzeugs befestigt. Zur Montage des Verkleidungsteiles 20 wird die Schnappverbindung zwischen dem Gelenkkopf 30 und der Gelenkpfanne 22 hergestellt. Wie weiter unten ausführlicher beschrieben ist, kann die Schnappverbindung so ausgebildet sein, daß ihre Haltekraft und damit auch die zum Einschnappen der Schnappverbindung erforderliche Kraft wesentlich geringer ist als die zum Einrasten oder weiteren Einschieben der Rastverbindung erforderliche Kraft. Daher kann die Verkleidung 20 montiert werden, ohne daß die Einstellung der Rastverbindung zwischen dem zweiten Befestigungsteil 14 und dem Zwischenelement 16 verändert wird.

Anschließend kann der Abstand zwischen dem Verkleidungsteil 20 und dem Trägerteil 48 eingestellt werden, beispielsweise um zwischen benachbarten Verkleidungsteilen, etwa zwischen der Türverkleidung und dem Armaturenbrett, ein einheitliches Spaltmaß zu erzielen. Dazu wird auf das Verbindungselement in axialer Richtung eine Kraft ausgeübt, die wesentlich höher ist als die zum Einschnappen der Schnappverbindung erforderliche Kraft. Damit rastet das Kolbenelement 28 um die entsprechende Anzahl von Stufen tiefer im Topfelement 40 ein, wodurch die axiale Länge des Verbindungselementes 10 soweit verringert wird, daß sich der gewünschte Abstand zwischen dem Verkleidungsteil 20 und dem Trägerteil 48 ergibt.

Ist es erforderlich, das Verkleidungsteil 20 abzunehmen, so muß nur die Haltekraft der Schnappverbindung überwunden werden. Die Haltekraft muß aber je nach Material und Form der Verkleidung u.U. recht hoch sein, damit die Verkleidung auch dann sicher befestigt ist, wenn sie im montierten Zustand durch innere Verbiegung infolge von Fertigungstoleranzen unter Spannung steht und damit auf das Verbindungselement 10, insbesondere auf die Schnappverbindung, eine Zugkraft ausübt. Die Haltekraft der Schnappverbindung ist unter anderem von der Länge der Schlitze 24 abhängig. Diese können bis zur unteren Scheibe 17 reichen, wenn eine geringere Haltekraft gewünscht wird. Sie können, wenn eine sehr hohe Einschnappkraft gefragt ist im Extremfall aber auch ganz entfallen oder nur in einer stellenweise geringeren Wandstärke der Gelenkpfanne 22 bestehen, so daß nur noch die Elastizität des Materials die Dehnung der Gelenkpfanne 22 ermöglicht. Es muß jedoch die Haltekraft der Rastverbindung stets höher sein als die Haltekraft der Schnappverbindung, damit die Einstellung des Abstands zwischen Verkleidungselement 20 und Träger 48 beim Demontieren der Verkleidung oder der anschließenden erneuten Montage nicht verändert wird. Die Haltekraft der Rastverbindung hängt aber auch vom Durchmesser von Topfelement und Kolbenelement ab, so daß durch einen größeren Durchmesser eine höhere Haltekraft erreichbar ist.

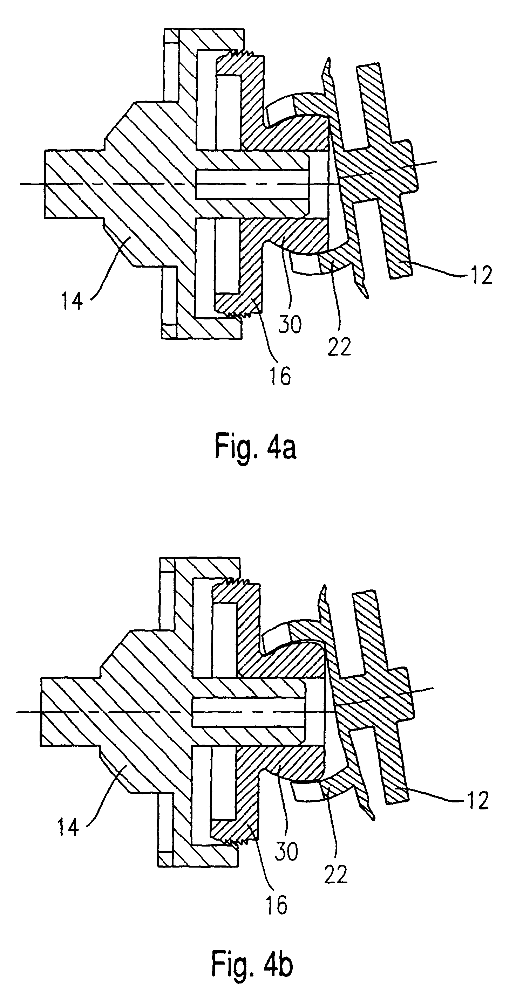

Damit die Verkleidung leichter demontiert werden kann, ist die Schnappverbindung so konstruiert, daß das erste Halteteil 12 und das Zwischenelement 16 gegeneinander verkippt werden können, indem das Verkleidungsteil in der Nähe des Verbindungselementes 10 leicht gebogen wird. Dabei dreht sich die Gelenkpfanne 22 auf dem Gelenkkopf 30, bis der Rand der Gelenkpfanne an der Stirnfläche 31 anstößt (Fig. 4a). Bei weiterem Verkippen des ersten Halteteils 12 wird die Gelenkpfanne 22 gespreizt (Fig. 4b), wobei aufgrund der Hebelwirkung der sich an der Stirnfläche 31 abstützenden Gelenkpfanne 22 die aufzubringende Kraft geringer als die Haltekraft der Schnappverbindung sein kann. Auf diese Weise läßt sich die Verkleidung leicht lösen, obwohl die Haltekraft der Schnappverbindung sehr hoch sein kann.

Bei der Wiedermontage des Verkleidungsteiles 20 muß nur die Schnappverbindung wieder hergestellt werden, wozu, wie bereits erwähnt, eine wesentlich geringere Kraft erforderlich ist als zum Einrasten der Rastverbindung zwischen zweitem Befestigungselement 14 und Zwischenelement 16. Daher wird bei Montage des Verkleidungsteiles 20 die Rastverbindung nicht verstellt, so daß sich nach der Wiedermontage automatisch der vorher eingestellte Abstand und damit auch beispielsweise das gewünschte Spaltmaß wieder ergibt.

Bei den nachfolgend beschriebenen Ausführungsformen der Erfindung sind für bereits bekannte Bauelemente jeweils um 100 erhöhte Bezugszeichen verwendet.

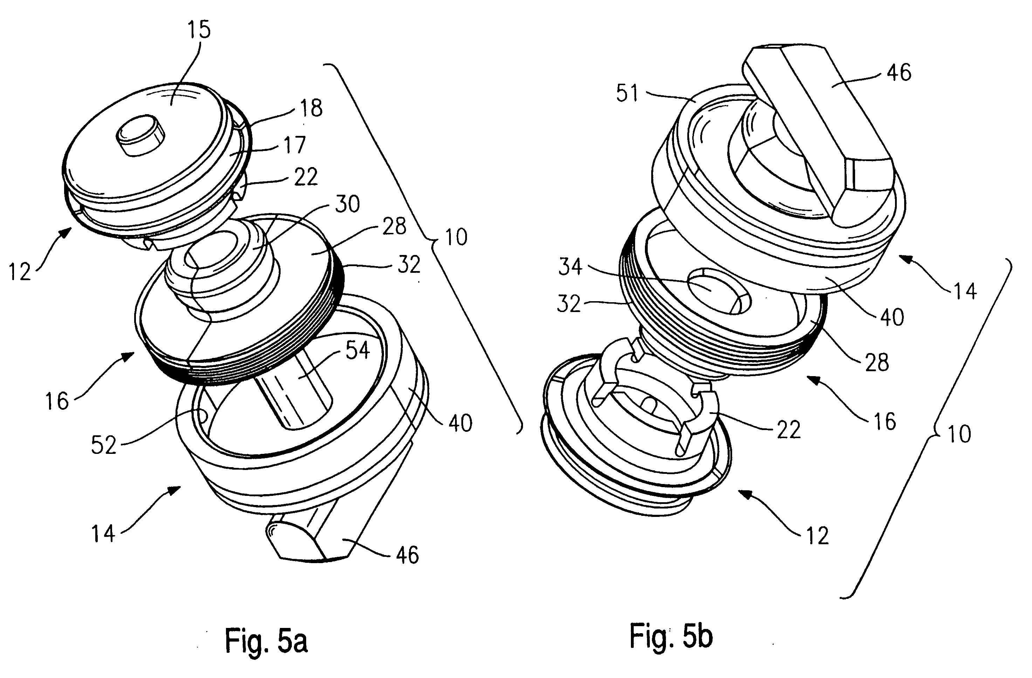

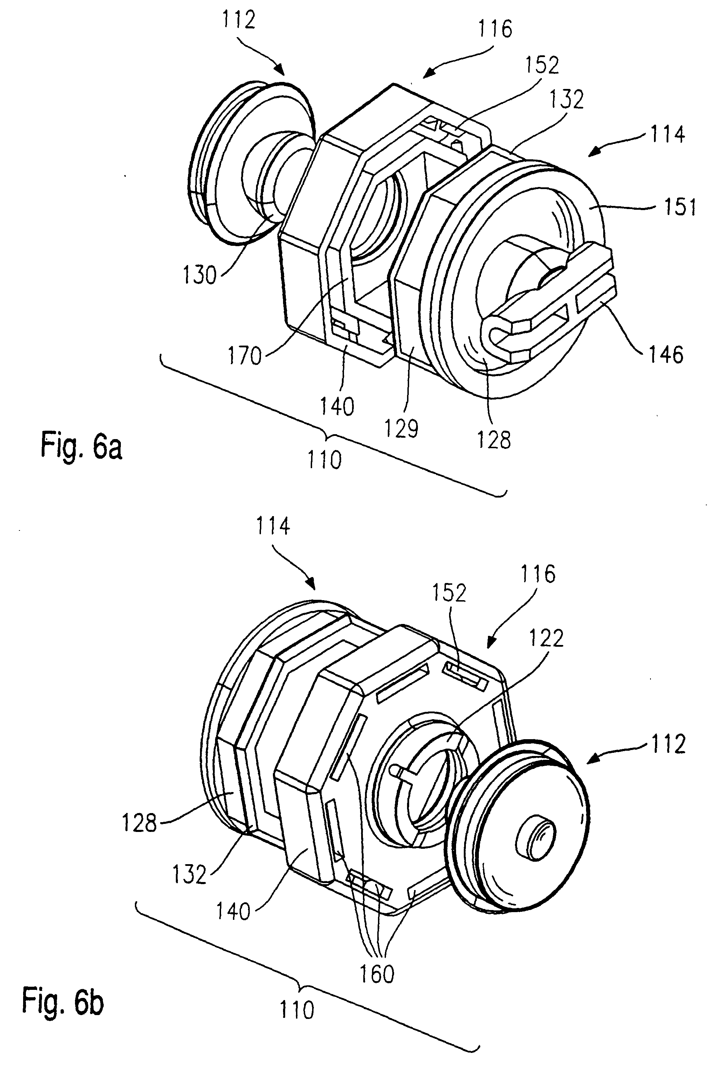

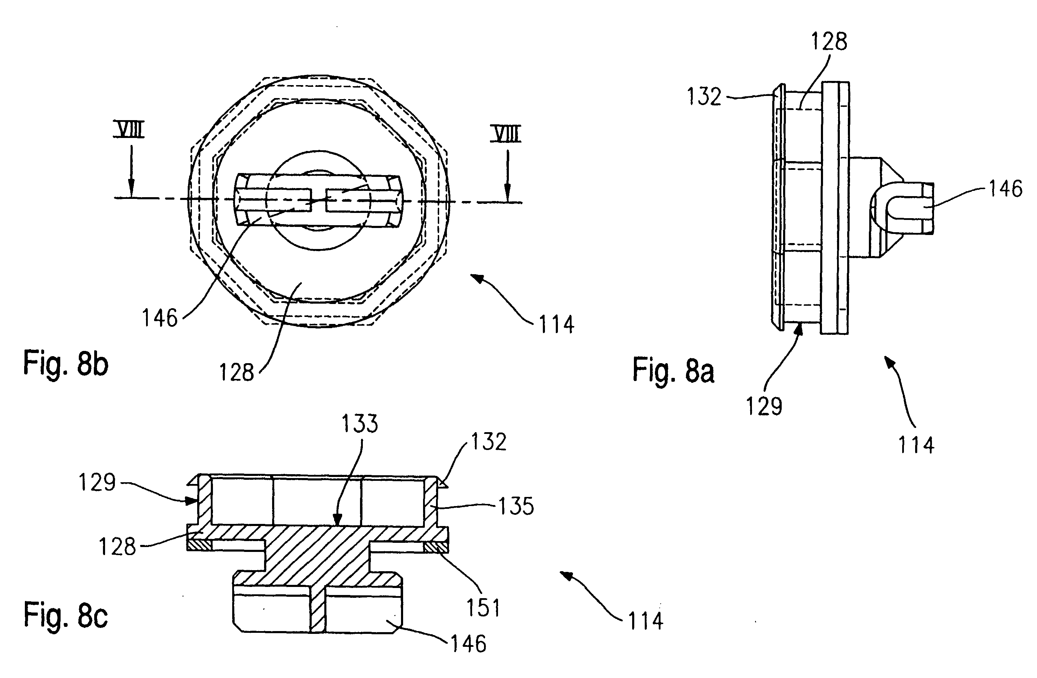

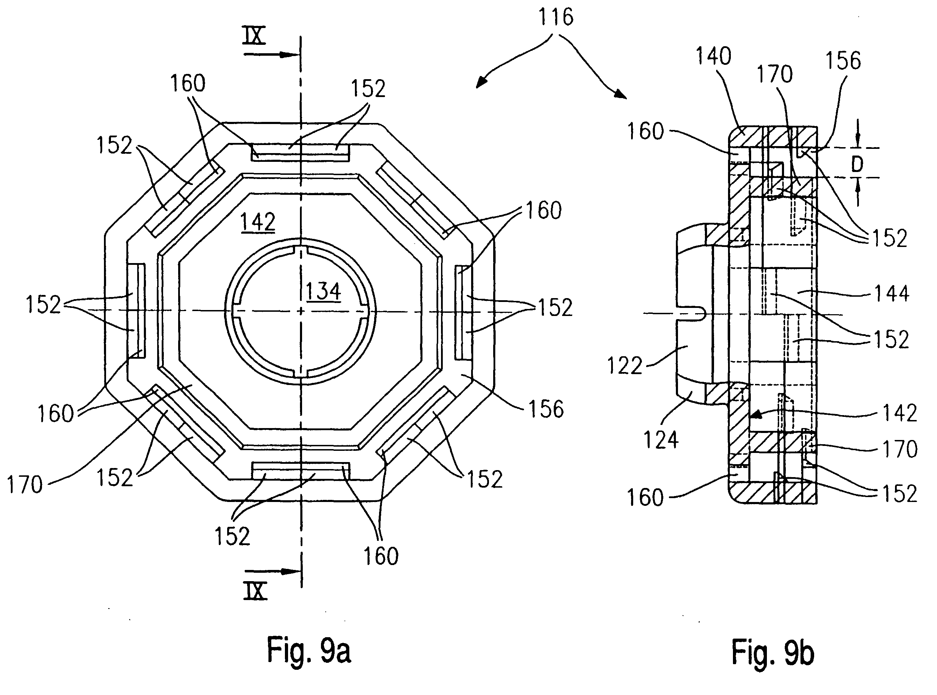

In den Figuren 5a, 5b bis 9a, 9b ist eine erste Ausführungsform eines erfindungsgemäßen Verbindungselements gezeigt, bei der die Schnappverbindung und die Rastverbindung im Gegensatz zu dem vorbeschriebenen Verbindungselement umgekehrt angebracht sind. Dies bedeutet, daß am Zwischenelement 116 (Figuren 6, 6b) die Gelenkpfanne 122 und das Topfelement 140 angebracht sind, während sich der Gelenkkopf 130 am ersten Befestigungsteil 112 befindet und das Kolbenelement 128 am zweiten Befestigungsteil 114 vorgesehen ist.

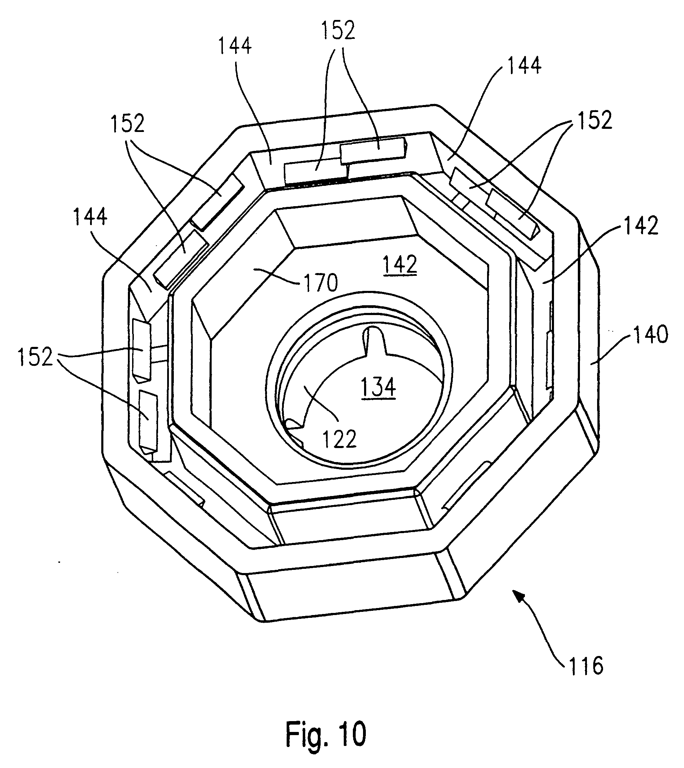

Bei dieser Ausführungsform haben das Kolbenelement 128 und das Topfelement 140 einen oktogonalen Querschnitt. Dadurch sind die Außenflächen und Innenflächen des Kolbenelements 128 und des Topfelementes 140 jeweils in acht Flächenabschnitte aufgeteilt. Das Verbindungselement 110 ist auf diese Weise besser handhabbar. Weitere Vorteile dieser Querschnittsform ergeben sich bei der Herstellung des Topfelementes 140, wie weiter unten ausführlicher beschrieben ist. Die Außenfläche des Kolbenelements 128 ist mit einem umlaufenden Rastzahn 132 versehen. Wie in Figur 10 zu sehen ist, sind dagegen an jedem der Innenflächenabschnitte 144 des Topfelementes 140 jeweils zwei Rastzähne 152 angebracht. Dabei sind benachbarte Rastzähne 152 gegeneinander in der Höhe versetzt, so daß das Kolbenelement 128 wiederum in mehreren Stufen im Topfelement 140 einrasten kann. In dieser besonderen Ausführungsform ist die Anordnung der Rastzähne 152 an einander diametral gegenüberliegenden Flächenabschnitten 144 identisch, so daß in jeder Raststufe zwei Zähne 152 mit dem Rastzahn 132 des Kolbenelements im Eingriff sind. Dadurch ist eine symmetrische Kräfteverteilung gewährleistet; es besteht geringere Gefahr, daß das Kolbenelement im Topfelement verkantet und sich dadurch die Rastverbindung löst. Besonders vorteilhaft ist eine Anordnung, bei der sich jeweils die um 90° versetzte Zähne 152 auf gleicher Höhe befinden, so daß immer vier Zähne in Eingriff stehen, da sich in diesem Fall eine besonders gleichmäßige Kräfteverteilung ergibt. Für die erste Raststufe, in der sich das Verbindungselement vor der Montage befindet, ist es allerdings ausreichend, wenn zwei der Rastzähne 152 im Eingriff mit dem Rastzahn 132 sind.

Diese Anordnung der Rastzähne 152 hat den Vorteil, daß die Rastzähne gegeneinander in der Höhe um Schritte versetzt sein können, die kleiner sind als die Basislänge des Rastzahnquerschnittes. Dadurch ergibt sich für die Rastverbindung eine Einteilung mit kleineren Stufen und damit eine feinere Einstellmöglichkeit für das Abstandsmaß zwischen Verkleidungsteil und Trägerteil. Selbstverständlich kann die Ausbildung mehrerer Rastzähne, die in Umfangsrichtung über die Innenfläche verteilt sind, auch auf einen sonstigen polygonalen oder auch runden Innenquerschnitt angewendet werden.

Im Boden 142 des Topfelementes 140 sind Öffnungen 160 (Figuren 9, 9b) gebildet, die bei der Herstellung als Spritzteil in vorteilhafter Weise die Verwendung von Formeinsätzen für die Hinterschneidungen der Zähne 152 zulassen. Die achteckige Form gestattet die Verwendung von geraden und damit im Vergleich mit einer runden Form einfacheren Formeinsätzen. Außerdem wäre die Herstellung des Topfelementes 140 als Spritzteil bei mehreren übereinander angeordneten Zähnen an der Innenfläche aufgrund der Hinterschneidungen wesentlich aufwendiger.

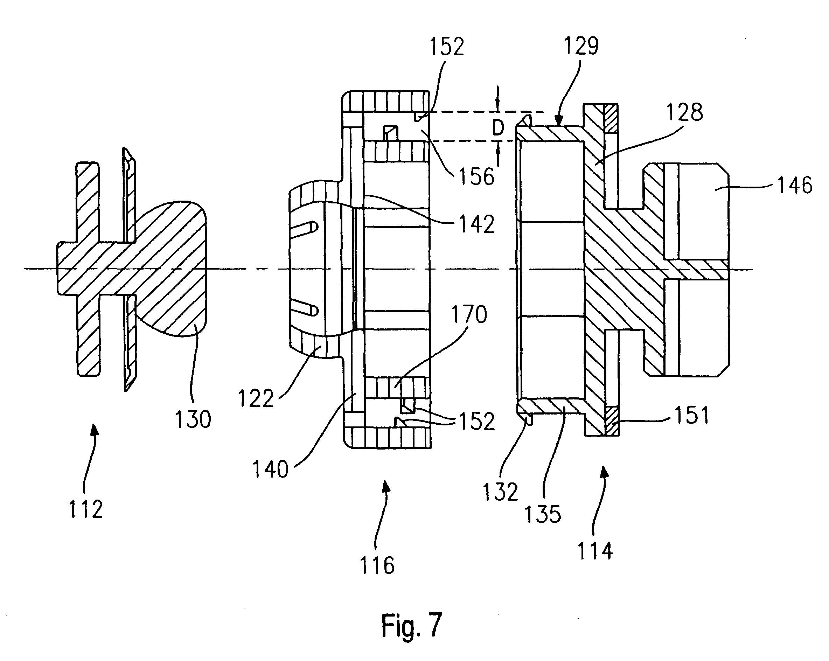

Weiterhin ist insbesondere in den Figuren 7 und 10 zu sehen, daß sich vom Topfboden 142 ein parallel zur Topfwand verlaufender Steg 170 erstreckt. Der Steg 170 ist von den Innenflächen 144 beabstandet, so daß sich ein Zwischenraum 156 der Breite D ergibt. Dieser Steg 170 dient zum einen der besseren Führung des Kolbenelementes 128 beim Eintauchen in das Topfelement 140, da der Abstand D gerade etwas größer ist als die Dicke der Wand 135 des Kolbenelementes 128 und die Höhe des Rastzahnes 132 (Fig. 7). Zum anderen verhindert er eine elastische Verbiegung des Kolbenelementes 128 beim Einrasten der Zähne 132, 152. Da die Wand des Topfelementes 140 im Bereich der Flächenabschnitte 144 aufgrund der Einsatzöffnungen 160 elastisch durchgebogen werden kann, weisen die Rastzähne 152 im Vergleich zu dem vorher beschriebenen Zahn 52 am Topfelement 40 mit rundem Querschnitt eine größere Nachgiebigkeit auf. Diese Nachgiebigkeit ist aber durch die stützende Wirkung des Steges 170, der eine Durchbiegung der Wand 135 des Kolbenelementes 128 im Bereich der Zähne 132 weitgehend verhindert, ausgeglichen.

Die Haltekraft der Rastverbindung ist außerdem durch die Gestaltung der Rastzähne 132, 152 erhöht. Deren Querschnitt in Einsteckrichtung ist nämlich sägezahnförmig (Figuren 9b, 10), wobei die steile Zahnflanke jeweils zum Boden des Topfelements 140 bzw. des Kolbenelements 128 weist. Auf diese Weise ergibt sich eine optimale Haltekraft zwischen den Zähnen 132, 152, da die Wirkungslinie der Haltekraft senkrecht zu den Flankenflächen steht. Durch geeignete Auswahl des Winkels für die steile Zahnflanke kann außerdem die Eindruckkraft in Einsteckrichtung ausreichend hoch eingestellt werden, damit ein unbeabsichtigtes Zusammendrücken des Verbindungselementes, beispielsweise bei einer Wiedermontage des Verkleidungsteils, verhindert ist.

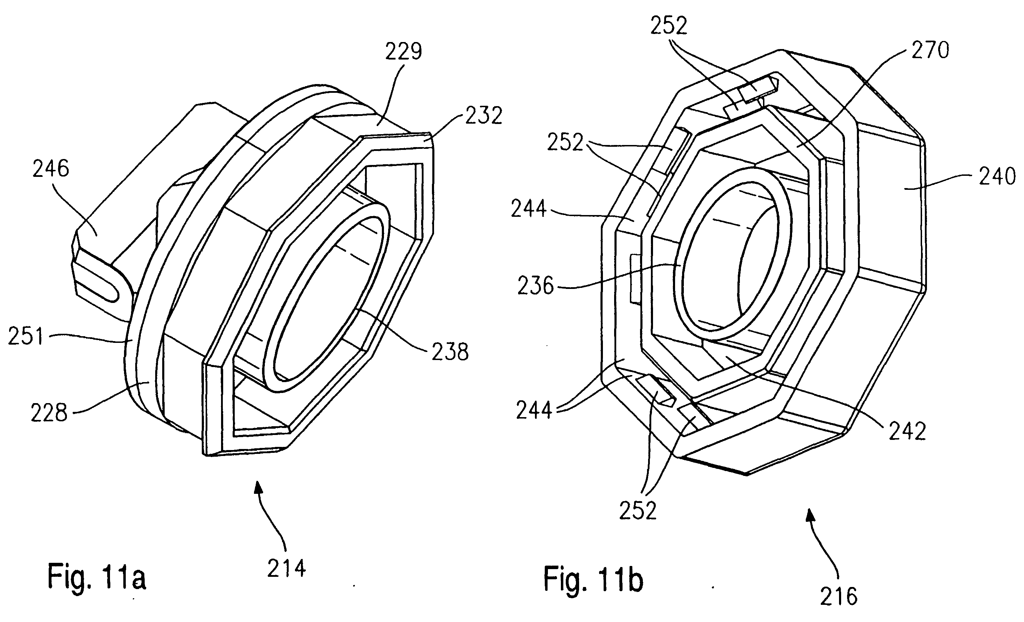

In den Figuren 11a und 11b ist eine zweite Ausführungsform zu sehen, bei der anstelle des in Zusammenhang mit der ersten Ausführungsform beschriebenen Zentrierstifts 54 ein anderes Führungselement vorgesehen ist. Das Führungselement besteht hier aus einem ersten Führungssteg 236, der sich senkrecht vom Boden 242 des Topfelementes 240 erstreckt. Der erste Führungssteg hat einen kreisrunden Querschnitt, kann aber auch von anderer Form, etwa achteckig, angepaßt an die Form des Topfelements 240, sein. Entsprechend dazu befindet sich am Boden des Kolbenelements 228 ein zweiter Führungssteg 238, dessen Innendurchmesser etwas größer ist als der Außendurchmesser des ersten Führungssteges 236. Durch die im Vergleich zu dem Zentrierstift 54 größeren Durchmesser der Führungsstege 236, 238 ist ein besserer Schutz gegen Verkanten gewährleistet.

## Patentansprüche

1. Verbindungselement (110), insbesondere zum Verbinden eines Verkleidungsteiles (20) mit einem Trägerteil (48) eines Kraftfahrzeuges, mit einem ersten Befestigungsteil (112) und einem zweiten Befestigungsteil (114; 214), wobei ein Zwischenelement (116; 216) vorgesehen ist, das mit dem ersten Befestigungsteil (112) durch eine Schnappverbindung verbunden ist und das mit dem zweiten Befestigungsteil (114; 214) durch eine Rastverbindung verbunden ist, wobei die Haltekraft der Rastverbindung wesentlich größer ist als die Haltekraft der Schnappverbindung, wobei die Rastverbindung gebildet ist durch ein Topfelement (140; 240) und ein Kolbenelement (128; 228), das wenigstens teilweise in das Topfelement eintaucht, wobei an der Innenfläche (144; 244) des Topfelements und an der Außenfläche (129; 229) des Kolbenelements jeweils wenigstens ein Rastzahn (132, 152; 232, 252) angebracht ist, wobei einem Rastzahn (132; 232) an der einen Fläche (129; 229) mehrere Rastzähne (152; 252) in unterschiedlicher Höhe an der anderen Fläche (144; 244) gegenüberstehen, so daß das Kolbenelement (128; 228) in mehreren Stufen im Topfelement (140; 240) einrasten kann, **dadurch gekennzeichnet, daß** die mehreren Rastzähne (152; 252) an der einen Fläche in Umfangsrichtung über diese Fläche (144; 244) verteilt sind und gegeneinander in der Höhe um Schritte versetzt sind, die kleiner sind als die Basislänge des Rastzahnquerschnittes.

2. Verbindungselement nach Anspruch 1, **dadurch gekennzeichnet, daß** das Topfelement (140) und das Kolbenelement (128) einen runden Querschnitt aufweisen.

3. Verbindungselement nach Anspruch 1 oder 2, **dadurch gekennzeichnet, daß** das Topfelement (140; 240) und das Kolbenelement (128; 228) einen polygonalen Querschnitt aufweisen, wodurch an der Innenfläche des Topfelements und an der Außenfläche (129; 229) des Kolbenelements Flächenabschnitte (144; 244) gebildet sind.

4. Verbindungselement nach Anspruch 3, **dadurch gekennzeichnet, daß** die Rastzähne (152; 252) an einem Flächenabschnitt (144; 244) gegenüber den Rastzähnen des benachbarten Flächenabschnittes in der Höhe versetzt sind.

5. Verbindungselement nach einem der vorhergehenden Ansprüche, **dadurch gekennzeichnet, daß** die lösbare Schnappverbindung gebildet ist durch einen Gelenkkopf (130) und eine spreizbare Gelenkpfanne (122).

6. Verbindungselement nach Anspruch 5, **dadurch gekennzeichnet, daß** der Gelenkkopf (130) im wesentlichen kugelförmig ausgebildet ist

7. Verbindungselement nach einem der vorhergehenden Ansprüche, **dadurch gekennzeichnet, daß** an wenigstens einem der beiden Befestigungsteile eine Dichtung (151; 251) vorgesehen ist.

## Claims

1. A connecting element (110), in particular for connecting a panelling piece (20) with a support piece (48) of a motor vehicle, comprising a first fastening piece (112) and a second fastening piece (114; 214), an intermediate element (116; 216) being provided which is connected with the first fastening piece (112) by a snap connection and which is connected with the second fastening piece (114; 214) by a detent connection, the holding force of the detent connection being substantially greater than the holding force of the snap connection, the detent connection being formed by a cup element (140; 240) and a piston element (128; 228) which at least partially penetrates the cup element, at least one detent tooth (132, 152; 232, 252) being arranged respectively on the inner surface (144; 244) of the cup element and on the outer surface (129; 229) of the piston element, with one detent tooth (132; 232) on the one surface (129; 229) lying opposite several detent teeth (152; 252) at differing heights on the other surface (144; 244), so that the piston element (128; 228) can engage in several stages in the cup element (140; 240), **characterized in that** the several detent teeth (152; 252) on the one surface are distributed in the peripheral direction across this surface (144; 244) and are staggered as regards their level with respect to each other by steps which are smaller than the base length of the detent tooth cross-section.

2. The connecting element according to Claim 1, **characterized in that** the cup element (140) and the piston element (128) have a round cross-section.

3. The connecting element according to Claim 1 or 2, **characterized in that** the cup element (140; 240) and the piston element (128; 228) have a polygonal cross-section, whereby area sections (144; 244) are formed on the inner surface of the cup element and on the outer surface (129; 229) of the piston element.

4. The connecting element according to Claim 3, **characterized in that** the detent teeth (152; 252) on an area section (144; 244) are staggered vertically with respect to the detent teeth of the adjacent area section.

5. The connecting element according to any of the preceding claims, **characterized in that** the detachable snap connection is formed by an articulation head (130) and an expandable swivel pan (122).

6. The connecting element according to Claim 5, **characterized in that** the articulation head (130) is constructed so as to be substantially spherical.

7. The connecting element according to any of the preceding claims, **characterized in that** a seal (151; 251) is provided on at least one of the two fastening pieces.

## Revendications

1. Elément de liaison (110), en particulier pour relier un élément de revêtement (20) avec un élément de support (48) d'un véhicule, comportant une première partie de fixation (112) et une deuxième partie de fixation (114 ; 214), dans lequel est prévu un élément intermédiaire (116 ; 216) qui est relié à la première partie de fixation (112) par une liaison par encliquetage et qui est relié à la deuxième partie de fixation (114 ; 214) par une liaison par enclenchement, la force de retenue de la liaison par enclenchement étant sensiblement supérieure à la force de retenue de la liaison par encliquetage, la liaison par enclenchement étant formée par un élément en forme de pot (140 ; 240) et par un élément à piston (128 ; 228) qui plonge au moins partiellement dans l'élément en forme de pot, au moins une dent d'enclenchement (132 ; 232) étant disposée respectivement sur la surface intérieure (144 ; 244) de l'élément en forme de pot et sur la surface extérieure (129 ; 229) de l'élément à piston, et à une dent d'enclenchement (132 ; 232) sur l'une des surfaces (129 ; 229) sont opposées plusieurs dents d'enclenchement (152 ; 252) aménagées à différentes hauteurs sur l'autre surface (144 ; 244), de telle sorte que l'élément à piston (128 ; 228) peut s'enclencher sur plusieurs étages dans l'élément en forme de pot (140 ; 240), **caractérisé en ce que** les multiples dents d'enclenchement (152 ; 252) sont réparties sur l'une des surfaces dans le sens périphérique de cette surface (144 ; 244) et sont décalées en hauteur les unes par rapport aux autres par des pas qui sont inférieurs à la longueur de base de la section transversale de dent d'enclenchement.

2. Elément de liaison selon la revendication 1, **caractérisé en ce que** l'élément en forme de pot (140) et l'élément à piston (128) présentent une section transversale ronde.

3. Elément de liaison selon la revendication 1 ou 2, **caractérisé en ce que** l'élément en forme de pot (140 ; 240) et l'élément à piston (128 ; 228) présentent une section transversale polygonale, grâce à quoi des portions de surface (144 ; 244) sont formées sur la surface intérieure de l'élément en forme de pot et sur la surface extérieure (129 ; 229) de l'élément à piston.

4. Elément de liaison selon la revendication 3, **caractérisé en ce que** les dents d'enclenchement (152 ; 252) sur une portion de surface (144 ; 244) sont décalées en hauteur par rapport aux dents d'enclenchement de la portion de surface voisine.

5. Elément de liaison selon l'une des revendications précédentes, **caractérisé en ce que** la liaison par encliquetage amovible est formée par une tête articulée (130) et par un coussinet à rotule extensible (122).

6. Elément de liaison selon la revendication 5, **caractérisé en ce que** la tête articulée (130) est réalisée sensiblement de forme sphérique.

7. Elément de liaison selon l'une des revendications précédentes, **caractérisé en ce qu'**il est prévu un joint (151 ; 251) sur au moins une des deux parties de fixation.
